# EUROPEAN PATENT SPECIFICATION

(11) **EP 3 854 945 B1**
(45) Date of publication and mention of the grant of the patent: **08.03.2023**
(21) Application number: 20153287.6
(22) Date of filing: 23.01.2020
(51) Int. Cl.: E02F 3/88, E02F 7/04, F16K 7/10, F16K 31/12

(54) **SUCTION HOPPER DREDGER**
SAUGBAGGER MIT TRICHTER
DRAGUE À TRÉMIE D'ASPIRATION

(43) Date of publication of application: 28.07.2021
(73) Proprietor: Damen 40 B.V., 4200 AA Gorinchem (NL)
(72) Inventor: BIJLSMA, Aldo, 3971 ED Driebergen-Rijssenburg (NL); WINKELMAN, Marius Otto, 2803 GL Gouda (NL)
(74) Representative: De Vries & Metman

(56) References cited:
- WO-A2-2016/032328
- JP-A- S59 145 812
- NL-A- 7 800 470
- US-A- 3 658 386

## Description

The present invention pertains to a suction hopper dredger, comprising a hopper for collecting and precipitating solids in dredged material, the hopper being provided with an overflow including a pipe for transporting liquid from the hopper to the environment of the dredger and a valve for adjusting flow through the pipe.

Such a suction hopper dredger is known in the art. The dredged material is a mixture of solids and water. In general the goal of a suction hopper dredger is that the dredged material settles in the hopper while the surplus water leaves the hopper through the overflow. The water that flows into the overflow has a lower concentration of solids than the dredging material. The solids are fine particles of sand, clay or the like which are diffused in the water. From environmental point of view it is undesired that fine particles diffuse in the water around the dredger without sedimentation. The fine particles are visible and may contaminate the water. The adverse phenomenon can be reduced by maintaining the water flow at a low flow speed, so that turbulence in the water is minimal and the flow is laminar. To maintain low flow speeds the water level in the overflow must remain only slightly below the water level in the hopper. This can be attained by mounting a so-called environmental valve in the overflow.

WO 2016/032328 is related to an overflow system for a hopper dredger which comprises an overflow tube, an inlet for taking in head water from the hopper, and a collector to collect the flow of head water entering the inlet and guide the flow to the overflow tube. The collector comprises a substantially horizontal top portion which delineates a top of a flow path for head water into the collector to ensure substantially radial flow into the collector. At least one of the overflow tube and the inlet is adjustable for controlling flow into the overflow system.

It is an object of the present invention to provide a suction hopper dredger including an environmental valve which has a minimum sensitivity to muddy water.

This is achieved by the suction hopper dredger according to the invention which is characterized in that the valve comprises an inflatable element located in the pipe.

Due to the absence of mutually moving mechanical parts the risk of malfunctioning is minimized and the adjustment to the changing water level in the hopper is possible without adjusting mechanical parts.

The overflow may be provided with a tube for filling and/or emptying the inflatable element with a fluid.

In a particular embodiment the pipe is circular cylindrical at the location of the inflatable element, whereas the inflatable element is spherical in an inflated condition.

The inflatable element may be adapted such that it can close the pipe in an inflated condition.

The inflatable element may be adapted such that in its empty or partly filled condition the inflatable element is star-shaped as seen in longitudinal direction through the pipe. Such a pre-defined shape appears to create an appropriate flow profile along the inflatable element.

The inflatable element may be adapted such that in a partly inflated condition it is already spherical but still free from the pipe. This is advantageous in terms of flow conditions, since the flow is guided smoothly between the partly inflated inflatable element and the inner surface of the pipe. It appears that an appropriate flow rate can be achieved, which is high enough to direct small particles downwardly below the dredger and low enough to avoid turbulence. This minimizes the risk of visibility of diffusing small particles near the suction hopper dredger.

Preferably, the inflated element is located substantially in the centre of the pipe in the above-mentioned condition in order to cause a stable flow profile around the inflatable element.

The inflatable element may be attached to an upper end and a lower end of the pipe, for example by means of an auxiliary frame to which an upper and lower side of the inflatable element can be attached via cables or chains such that the inflatable element is hold at a centreline of the pipe.

The invention will hereafter be elucidated with reference to very schematic drawings showing embodiments of the invention by way of example.
Fig. 1 is a cut-away view of an embodiment of a suction hopper dredger according to the invention.
Fig. 2 is an enlarged perspective view of a part of the suction hopper dredger of Fig. 1, showing an overflow thereof.
Fig. 3 is a similar view as Fig. 2, but showing a different condition of the overflow.
Fig. 4 is a cross-sectional view of the overflow of Fig. 2.

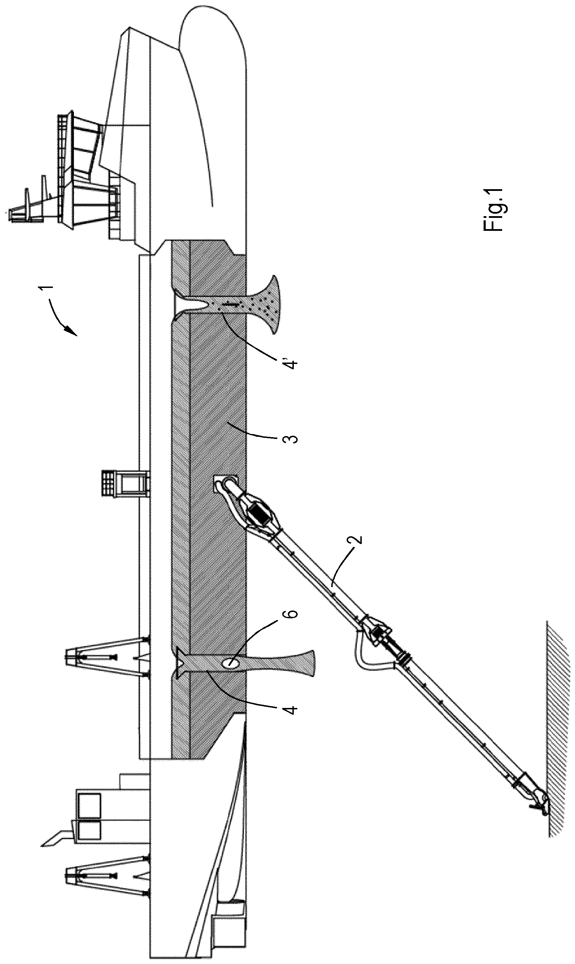

Fig. 1 shows an embodiment of a suction hopper dredger 1 according to the invention. The suction hopper dredger 1 is a vessel which is equipped for removing seabed material. Fig. 1 illustrates the suction hopper dredger 1 under operating conditions during a dredging operation. The suction hopper dredger 1 is suctioning a mixture of water and solid particles though a suction tube 2. The mixture is transported to a hopper 3 in the suction hopper dredger 1 where excess liquid flows through an overflow 4 downwardly and exits the suction hopper dredger 1 at a bottom thereof.

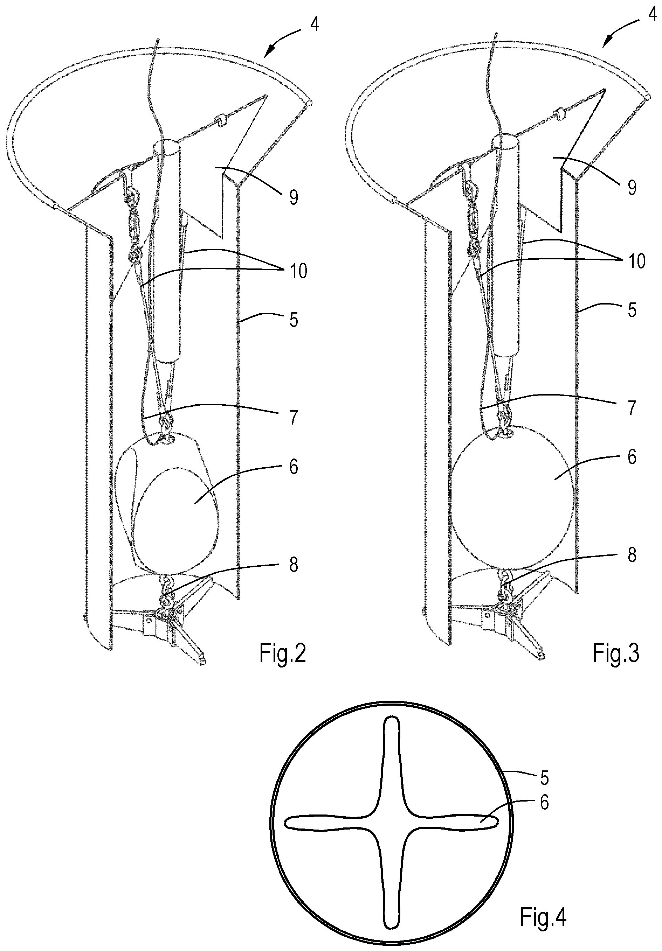

Fig. 2 shows the overflow 4 in more detail. The overflow 4 comprises a pipe 5 through which the excess liquid flows. The pipe 5 has a circular cylindrical portion and a funnel portion on top of the circular cylindrical portion. The pipe 5 has an open upper end and an open lower end. The overflow 4 is provided with a valve in the form of an inflatable element 6 for adjusting flow through the overflow 4.

The inflatable element 6 is located in the circular cylindrical portion of the pipe 5 and can be filled and emptied through a pressure tube 7. Fig. 2 illustrates the inflatable element 6 in an empty condition. The inflatable element 6 can be filled with a fluid, which is supplied from a fluid supply (not shown) at a distance from the overflow 4. The fluid may be a compressible or non-compressible gas, liquid, gel or the like. Fig. 4 shows the empty inflatable element 6 in cross-section. It can be seen that the inflatable element 6 has a predefined star shape in empty condition as seen in longitudinal direction through the pipe 5.

The inflatable element 6 has a fixed location with respect to the pipe 5 in longitudinal direction thereof. In the embodiment as shown in Figs. 2 and 3 a lower side of the inflatable element 6 is fixed to the lower end of the pipe 5 through a chain 8 and an auxiliary frame in the form of three radial rods which are joined at a centre of the pipe 5. An upper side of the inflatable element is fixed to the upper end of the pipe 5 through an auxiliary frame in the form of a cross plate 9 and cables 10. The cross plate 9 is attached to an inner side of the pipe 5. It is noted that numerous alternative fixing means are conceivable.

Fig. 3 shows the inflatable element 6 in an inflated condition. In this case the inflatable element 6 has a spherical or ball shape and is pressed against the inner side of the pipe 5 such that a flow-through area of the pipe 5 is fully obstructed. In a partly filled condition the inflatable element 6 may have a spherical or ball shape whereas the inflatable element 6 does not contact the pipe 5. In the latter case the inflatable element 6 causes a smooth flow between the inflatable element 6 and the pipe 5. Fig. 1 illustrates an effect of the presence of the inflatable element 6 by showing a virtual overflow 4' of the prior art without the inflatable element 6. The virtual overflow 4' is not part of the embodiment, but just shown to illustrate that the overflow 4 according to the invention creates a compact outflow pattern of water below the dredger 1, whereas the virtual overflow 4' has a relatively large air bubble at the entrance of the virtual overflow 4' and a strongly diverging outflow of water below the dredger 1. The overflow 4 according to the invention minimizes the risk of visibility of diffusing small particles near the suction hopper dredger 1.

The invention is not limited to the embodiments shown in the drawings and described hereinbefore, which may be varied in different manners within the scope of the claims. For example, the inflatable element may have a different shape in the empty condition and/or the inflated condition.

## Claims

1. A suction hopper dredger (1), comprising a hopper (3) for collecting and precipitating solids in dredged material, the hopper (3) being provided with an overflow (4) including a pipe (5) for transporting liquid from the hopper (3) to the environment of the dredger (1) and a valve for adjusting flow through the pipe (5), **characterized in that** the valve comprises an inflatable element (6) located in the pipe (5) .

2. A suction hopper dredger (1) according to claim 1, wherein the overflow (4) is provided with a tube (7) for filling and/or emptying the inflatable element (6) with a fluid.

3. A suction hopper dredger (1) according to claim 1 or 2, wherein the pipe (5) is circular cylindrical at the location of the inflatable element (6), and wherein the inflatable element (6) is spherical in an inflated condition.

4. A suction hopper dredger (1) according to any one of the preceding claims, wherein the inflatable element (6) is adapted such that it can close the pipe (5) in an inflated condition.

5. A suction hopper dredger (1) according to any one of the preceding claims, wherein the inflatable element (6) is adapted such that in its empty or partly filled condition the inflatable element (6) is star-shaped as seen in longitudinal direction through the pipe (5).

6. A suction hopper dredger (1) according to any one of the preceding claims, wherein the inflatable element (6) is adapted such that in a partly inflated condition it is spherical but still free from the pipe (5).

7. A suction hopper dredger (1) according to claim 6, wherein the inflated element (6) is located substantially in the centre of the pipe in said partly inflated condition.

8. A suction hopper dredger (1) according to any one of the preceding claims, wherein the inflatable element (6) is attached to an upper end and a lower end of the pipe (5) .

## Patentansprüche

1. Laderaumsaugbagger (1) mit einem Laderaum (3) zum Sammeln und Abscheiden von Feststoffen in Baggergut, wobei der Laderaum (3) einen Überlauf (4) aufweist, der ein Rohr (5) zum Transportieren von Flüssigkeit vom Laderaum (3) in die Umgebung des Baggers (1) und ein Ventil zum Einstellen des Durchflusses durch das Rohr (5) aufweist,
**dadurch gekennzeichnet, dass**
das Ventil ein im Rohr (5) angeordnetes aufpumpbares Element (6) aufweist.

2. Laderaumsaugbagger (1) nach Anspruch 1, wobei der Überlauf (4) ein Rohr (7) zum Füllen und/oder Entleeren des aufpumpbaren Elements (6) mit einem Fluid aufweist.

3. Laderaumsaugbagger (1) nach Anspruch 1 oder 2, wobei das Rohr (5) an der Stelle des aufpumpbaren Elements (6) kreiszylindrisch ist, und wobei das aufpumpbare Element (6) in einem aufgepumpten Zustand kugelförmig ist.

4. Laderaumsaugbagger (1) nach einem der vorangehenden Ansprüche, wobei das aufpumpbare Element (6) dazu eingerichtet ist, das Rohr (5) in einem aufgepumpten Zustand zu schließen.

5. Laderaumsaugbagger (1) nach einem der vorangehenden Ansprüche, wobei das aufpumpbare Element (6) derart ausgebildet ist, dass das aufpumpbare Element (6) in seinem leeren oder teilweise gefüllten Zustand in Längsrichtung durch das Rohr (5) betrachtet sternförmig ausgebildet ist.

6. Laderaumsaugbagger (1) nach einem der vorangehenden Ansprüche, wobei das aufpumpbare Element (6) derart ausgebildet ist, dass es in einem teilweise aufgepumpten Zustand kugelförmig ausgebildet ist, aber noch nicht am Rohr (5) anliegt.

7. Laderaumsaugbagger (1) nach Anspruch 6, wobei das aufpumpbare Element (6) in dem teilweise aufgepumpten Zustand im Wesentlichen in der Mitte des Rohrs angeordnet ist.

8. Laderaumsaugbagger (1) nach einem der vorangehenden Ansprüche, wobei das aufpumpbare Element (6) an einem oberen Ende und einem unteren Ende des Rohrs (5) befestigt ist.

## Revendications

1. Drague (1) à trémie d'aspiration, comprenant une trémie (3) pour collecter et précipiter des corps solides dans un matériau dragué, la trémie (3) étant pourvue d'un trop-plein (4) comprenant un tuyau (5) pour transporter un liquide à partir de la trémie (3) jusqu'à l'environnement de la drague (1) et une vanne pour ajuster un écoulement à travers le tuyau (5), **caractérisée en ce que** la vanne comprend un élément gonflable (6) placé dans le tuyau (5).

2. Drague (1) à trémie d'aspiration selon la revendication 1, dans laquelle le trop-plein (4) est pourvu d'un tube (7) pour remplir et/ou vider l'élément gonflable (6) d'un fluide.

3. Drague (1) à trémie d'aspiration selon la revendication 1 ou 2, dans laquelle le tuyau (5) est cylindrique circulaire à l'emplacement de l'élément gonflable (6), et dans laquelle l'élément gonflable (6) est sphérique dans un état gonflé.

4. Drague (1) à trémie d'aspiration selon l'une quelconque des revendications précédentes, dans laquelle l'élément gonflable (6) est adapté de telle sorte qu'il puisse fermer le tuyau (5) dans un état gonflé.

5. Drague (1) à trémie d'aspiration selon l'une quelconque des revendications précédentes, dans laquelle l'élément gonflable (6) est adapté de telle sorte que dans son état vide ou partiellement rempli l'élément gonflable (6) soit en forme d'étoile tel que vu dans une direction longitudinale à travers le tuyau (5).

6. Drague (1) à trémie d'aspiration selon l'une quelconque des revendications précédentes, dans laquelle l'élément gonflable (6) est adapté de telle sorte que dans un état partiellement gonflé il soit sphérique mais toujours dépourvu du tuyau (5).

7. Drague (1) à trémie d'aspiration selon la revendication 6, dans laquelle l'élément gonflé (6) est placé sensiblement au centre du tuyau dans ledit état partiellement gonflé.

8. Drague (1) à trémie d'aspiration selon l'une quelconque des revendications précédentes, dans laquelle l'élément gonflable (6) est attaché à une extrémité supérieure et une extrémité inférieure du tuyau (5).
